# EUROPEAN PATENT APPLICATION

(11) **EP 4 027 253 A1**
(43) Date of publication of application: **13.07.2022**
(21) Application number: 21190315.8
(22) Date of filing: 09.08.2021
(51) Int. Cl.: G06F 16/93, G06Q 10/06

(54) **INFORMATION PROCESSING APPARATUS AND PROGRAM**

(30) Priority: 12.01.2021 JP 2021003024
(71) Applicant: Fujifilm Business Innovation Corp., Tokyo 107-0052 (JP)
(72) Inventor: SANO, Yasumasa, Kanagawa, 220-8668 (JP)
(74) Representative: Parker, Andrew James

(57) **Abstract**

An information processing apparatus includes at least one processor configured to receive designation of a process in a task, the task including a series of processes to be executed on a document, and extract and display a target file as a document file to be processed in the process that is designated in a document file group as a target of the task.

## Description

### BACKGROUND

### Technical Field

The present invention relates to an information processing apparatus and a program.

### Related Art

Various techniques for searching a specific file from a file group have been proposed in the related art for reducing time and effort of a work of finding a desired file from a large number of files.

JP-A-2014-170462 discloses an information processing apparatus that acquires an operation type for a document file, decides an operation sequence related to the document file based on the acquired operation type, collates the decided operation sequence with an operation sequence stored in a storage device, and specifies and displays a recommendation file related to a document file to be created in a next operation based on a collation result.

JP-A-2009-193200 discloses a document management system in which plural electronic documents are stored, a numerical value designated in accordance with attribute information of the electronic document is assigned as a coordinate value to the electronic document, each of the plural electronic documents is displayed as a symbol based on each coordinate value, one set of electronic documents is designated by receiving selection of a symbol displayed based on each coordinate value or designation of an area on a screen, information characterizing the set of electronic documents is extracted from the attribute information of the designated set of electronic documents, and the plural electronic documents stored in an electronic document storage unit 30 are searched based on the extracted information.

### SUMMARY

In a task in which a series of processes is executed on a document, when an attempt is made to execute a certain process, it is necessary to specify a document file that is a target of the process to be executed from a document file group targeted for the task. However, in a case where the number of documents targeted for the task is large, it is a troublesome work for the user to specify a document file that is a target of a process to be executed.

Aspects of non-limiting embodiments of the present disclosure relate to reducing time and effort of a user who specifies a document file that is a target of a process to be executed, as compared with a case in which a document file that is a target of a process in a task, designation of which is received from the user, of executing a series of processes on a document is not extracted from a document file group and is not displayed.
[1] According to an aspect of the present disclosure, there is provided an information processing apparatus including: at least one processor configured to receive designation of a process in a task, the task including a series of processes to be executed on a document, and extract and display a target file as a document file to be processed in the process that is designated in a document file group as a target of the task.
[2] In the information processing apparatus according to [1], the at least one processor may further be configured to display a non-target file in the document file group in a display mode that is different from a display mode for the target file, the non-target file being a document file other than the target file.
[3] In the information processing apparatus according to [2], the at least one processor may further be configured to receive designation of a document file for at least one of the target file and non-target file displayed, and display a selection condition under which the document file that is designated is determined as the target file or the non-target file.
[4] In the information processing apparatus according to [2], the at least one processor may further be configured to receive designation of the non-target file that is displayed, and change a display mode for the non-target file that is designated, to a display mode that is same as the display mode for the target file.
[5] In the information processing apparatus according to [2], the at least one processor may further be configured to switch the display mode of the non-target file between the display mode different from the target file and the display mode same display mode as the display mode for the target file, as the display mode for the non-target file.
[6] In the information processing apparatus according to [1], the at least one processor may further be configured to receive designation of a task of plural tasks, and, in response to receiving designation of the process in the task designated, display the target file of the process designated in the designated task and a quasi-target file that is a document file on which the process is executable in another task.
[7] In the information processing apparatus according to [6], the at last one processor may further be configured to display a document file other than the target file and the quasi-target file among the document file group that are the target of the task designated and the other task in a display mode different from a display mode for the target file and the quasi-target file.
[8] In the information processing apparatus according to [1], the at least one processor may further be configured to generate a selection condition of the target file based on a predetermined rule in accordance with a type of the process included in the task.
[9] According to another aspect of the present disclosure, there is provided a program causing a computer to execute a process, the process including: receiving designation of a process in a task, the task including a series of processes to be executed on a document, and extracting and displaying of a target file as a document file to be processed in the process that is designated in a document file group as a target of the task.

According to [1], it may be possible to reduce the time and effort of the user who specifies the document file that is the target of the process to be executed, as compared with a case in which a document file that is the target of the process in the task, designation of which is received from the user, of executing the series of processes on the document, is not extracted from the document file group and is not displayed.

According to [2], a whole picture of the document file to be processed in the task may be presented to the user, as compared with a configuration in which only a document file on which the designated process is to be executed is displayed.

According to [3], it may be possible to provide the user with an opportunity to review a selection condition, as compared with a configuration in which the document file or the like on which the designated process is to be executed is simply displayed.

According to [4], a specific document file may be treated as a document file to be individually processed, as compared with a configuration in which the document file or the like on which the designated process is to be executed is simply displayed.

According to [5], each document file may be uniformly treated as a document file to be processed, as compared with a configuration in which the document file on which the designated process is to be executed and the other document file are displayed only in different forms.

According to [6], it may be possible to efficiently specify the document file on which the designated process is executable, as compared with a configuration in which only the document file on which the designated process in the designated task is to be executed is displayed.

According to [7], the whole picture of the document file to be processed in the designated task may be presented to the user, as compared with a configuration in which only the document file on which the designated process is executable is displayed.

According to [8], it may possible to reduce time and effort for setting the selection condition as compared with a configuration in which the user inputs the selection condition.

According to [9], in the computer in which the program according to the present invention is installed, it may be possible to reduce the time and effort of the user who specifies the document file that is the target of the process to be executed, as compared with the case in which the document file that is the target of the process in the task, designation of which is received from the user, of executing the series of processes on the document, is not extracted from the document file group and is not displayed.

### BRIEF DESCRIPTION OF DRAWINGS

Exemplary embodiment(s) of the present invention will be described in detail based on the following figures, wherein:
Fig. 1 is a diagram illustrating a configuration of an information processing apparatus according to an exemplary embodiment;
Fig. 2 is a diagram illustrating a functional configuration of the information processing apparatus;
Fig. 3 is a diagram illustrating an operation related to display of a UI screen by the information processing apparatus, and is a flowchart illustrating an operation in a case where a task is designated on the UI screen;
Fig. 4 is a diagram illustrating an operation related to display of the UI screen by the information processing apparatus, and is a flowchart illustrating an operation in a case where a process is designated on the UI screen;
Fig. 5 is a diagram illustrating a configuration example of the UI screen;
Fig. 6 is a diagram illustrating a state in which one process is designated on the UI screen illustrated in Fig. 5;
Fig. 7 is a diagram illustrating a state in which another process is designated on the UI screen illustrated in Fig. 5; and
Fig. 8 is a diagram illustrating an example of an edit screen of selection conditions, which is an example of another UI screen.

### DETAILED DESCRIPTION

Hereinafter, an exemplary embodiment of the present invention will be described in detail with reference to the accompanying drawings.

### <Apparatus Configuration>

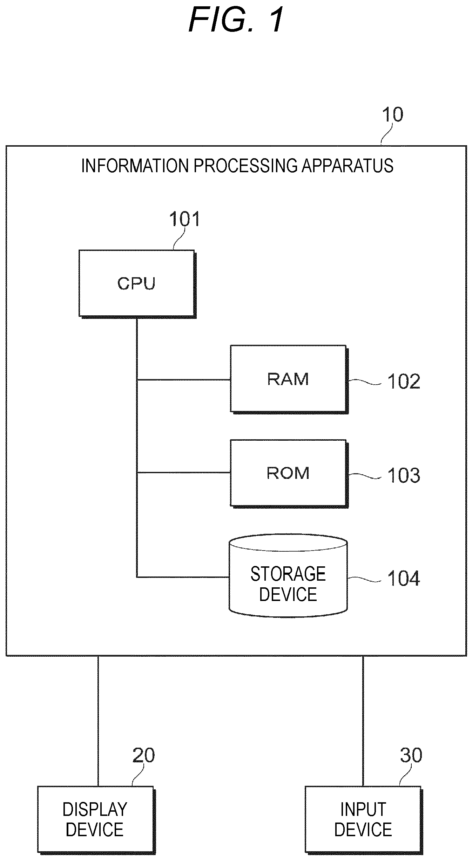

Fig. 1 is a diagram illustrating a configuration of an information processing apparatus according to the present exemplary embodiment. The information processing apparatus 10 is a device that receives an input of a content of a work performed by a user and presents a function for executing a process corresponding to the content of the input work. As the information processing apparatus 10, for example, a personal computer or the like is used. A display device 20 and an input device 30 are connected to the information processing apparatus 10. The display device 20 is a device that displays various screens for the information processing apparatus 10 to present information to a user or receive an operation by a user. As the display device 20, for example, a liquid crystal display, an organic electro-Luminescence (EL) display, or the like is used. The input device 30 is a device that allows a user to input data and a command. As the input device 30, for example, a keyboard for inputting a text, a pointing device for selecting or designating a specific position or indication on a screen of the display device 20, or the like is used. Examples of the pointing device include a mouse and a touch panel.

The information processing apparatus 10 includes a central processing unit (CPU) 101 serving as a calculation unit, a random access memory (RAM) 102 serving as a storage unit, a read only memory (ROM) 103, and a storage device 104. The RAM 102 is a main storage device (main memory), and is used as a working memory when the CPU 101 performs an arithmetic process. The ROM 103 stores programs and data such as a setting value prepared in advance, and the CPU 101 reads a program or data directly from the ROM 103 and executes a process. The storage device 104 is a unit for storing a program and data. A program is stored in the storage device 104, and the CPU 101 reads the program stored in the storage device 104 into the main storage device and executes the program. In addition, a result of a process by the CPU 101 is stored and saved in the storage device 104. As the storage device 104, for example, a magnetic disk device, a solid state drive (SSD), or the like is used.

### <Functional Configuration of Information Processing Apparatus>

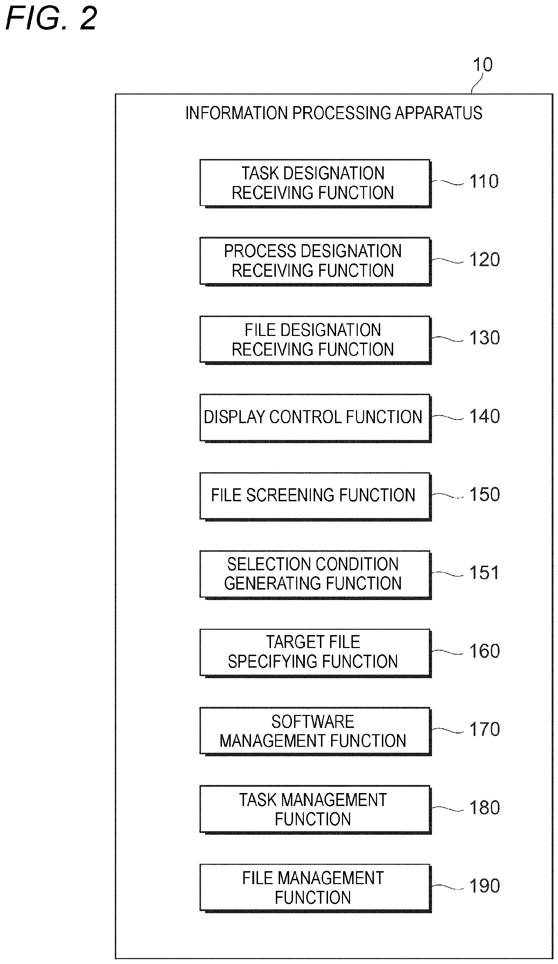

Fig. 2 is a diagram illustrating a functional configuration of the information processing apparatus 10. The information processing apparatus 10 includes a task designation receiving function 110, a process designation receiving function 120, a file designation receiving function 130, a display control function 140, a file screening function 150, a selection condition generating function 151, a target file specifying function 160, a software management function 170, a task management function 180, and a file management function 190. These functions are realized, for example, by the CPU 101 illustrated in Fig. 1 executing a program.

The information processing apparatus 10 causes the display device 20 to display a user interface screen (hereinafter referred to as a "UI screen") that presents information to the user and receives an operation by the user, receives an operation of the user performed on the UI screen, and performs an operation according to an operation content. Although details will be described later, the UI screen includes a display for selecting a task, a display for selecting a process to be performed in a task, a display for selecting a file to be processed, and the like. The type of the file to be processed is not particularly limited, but may be, for example, a document file. A display for selecting a file may be, for example, a display of a file having potential to be a target of the selected process among files stored in the storage unit. In addition, it is conceivable to display all the files stored in the storage unit and to display a file having potential to be a target of the selected process and a file that cannot be the target of the selected process so as to be identifiable from each other. In the following, it is assumed that the display is performed by the latter method, and the latter method will be described. A configuration of the UI screen and the details of a display control will be described later.

The storage unit is a unit for storing a file having potential to be selected, and as a hardware, for example, the storage device 104 illustrated in Fig. 1 or an external storage device connected to the information processing apparatus 10 may be used. In addition, as the software, a folder, a directory, or the like may be specified. Hereinafter, it is assumed that a file stored in a specific folder is displayed on the UI screen as a file having potential to be selected.

The task designation receiving function 110 is a function of receiving designation of one task from among plural tasks. Here, it is assumed that the task is performed by executing plural predetermined tasks. In the present exemplary embodiment, a routine task in which a series of works are executed in accordance with a work procedure defined by a workflow is used. In addition, each of the works related to the task may be referred to as a process. The designation of the task is performed by the user operating the input device 30 using the UI screen. A specific operation will be described later together with a configuration of the UI screen.

The process designation receiving function 120 is a function of receiving designation of a process to be executed in a task included in the designated task. Each process in the task is executed by an extension function prepared in accordance with each process. Here, the extension function is realized by, for example, a software module such as a so-called plug-in. The software module that realizes the extension function may be stored and saved in the storage device 104 illustrated in Fig. 1, may be saved in an external device, and may be acquired from the external device as necessary. The designation of the process in the task is performed by the user operating the input device 30 using the UI screen. A specific operation will be described later together with the configuration of the UI screen.

The file designation receiving function 130 is a function of receiving designation of a file displayed on the UI screen. Here, all files stored in a specific folder are displayed on the UI screen. Further, when the process is designated, the files stored in the specific folder are divided into a file having potential to be a target of the designated process and a file that cannot be a target of the designated process. Hereinafter, the former is referred to as a "target file", and the latter is referred to as a "non-target file". Therefore, the target file and the non-target file are displayed on the UI screen, and both files have potential to be designated targets received by the file designation receiving function 130. In other words, the target file has potential to be a designated target as well as a target of the designated process. On the other hand, the non-target file is not the target of the designated process, but has potential to be the designated target. Although details will be described later, in a case where the target file is designated and a case where the non-target file is designated, events to be executed in the information processing apparatus 10 are different on a condition of the designation. A specific file designation operation and an event based on the specification operation will be described later together with the configuration of the UI screen.

The display control function 140 is a function of controlling a display of the UI screen on the display device 20. The UI screen is a screen for displaying a task, a process included in the task, and a file having potential to be a target of the process. In the UI screen, the file having potential to be a target of the process is a file having potential to be a target of any process included in any of the tasks having potential to be designated. Such a file is divided into a file that is a target of any one of plural processes included in the designated task and a file that is not the target of the process, in a case where the task is designated. In addition, in a case where a process is designated, a file having potential to be a target of the process is divided into a file that is a target of the designated process and a file that is not the target of the designated process.

On the UI screen, in the case where a task is designated, the file that is the target of any one of the plural processes included in the designated task, and in the case where the process is designated, the file that is the target of the designated process, and the file that is not the target of the process are displayed on the UI screen in different display modes by the display control function 140. In a case where a specific selection operation is performed on the file displayed on the UI screen, an annotation display related to the selected file is displayed on the UI screen by the display control function 140. In addition, the UI screen is an operation screen for receiving various operations such as designation of a task, a process and a file. The specific display content of the UI screen and the details of the operation on the UI screen will be described later.

The file screening function 150 is a function of selecting a file to be processed in the designated task from the file displayed on the UI screen according to the type of the designated task. For example, in a case of a task of "billing process", a case is considered where there is a condition of "a document file that is input by reading original data by a scanner or fax reception, and whose creation date and time is from the 20th to the last day of each month" as a condition of the file to be processed in the task of the "billing process". In this case, among the files stored in a specific folder as the storage unit, a file that meets this condition is selected as a file to be processed in the task of the "billing process". In addition, in a case of a task of "approval", a case is considered where there is a condition of "a document file that is a file acquired by being transmitted to a specific shared folder and to which an annotation of a date stamp is attached" as a condition of a file to be processed in the task of the approval process. In this case, among the files stored in the specific folder, a file that meets this condition is selected as a file to be processed in the task of "approval". Such a file selection condition may be set in advance by the user in accordance with the type of a task, for example. In addition, as will be described later, in the case where the task is designated, the file screening function 150 may automatically set the file selection condition according to the designated task.

The selection condition generating function 151 is a function of generating a selection condition used in selecting a file by the file screening function 150. In a case where the selection condition is automatically set by the file screening function 150, the selection condition generating function 151 automatically generates the selection condition based on a pattern of the work procedure of the designated task. For example, in a case of a task including a pattern in which a process is executed in an order of "noise removal" and "optical character recognition (OCR)" in the work procedure, a condition such as "an image file that is input by reading original data by a scanner or FAX reception" may be generated as a condition of a file to be processed in the task. In addition, in a case of a task including a pattern having a process of "attaching an annotation for settlement" in the work procedure, a condition such as "a document file or a spreadsheet file acquired by retrieving from a specific shared folder" may be generated as a condition of a file to be processed in the task. A pattern of the work procedure in the task for generating such a file selection condition may be set in advance by the user. In addition, a statistical process may be performed on an operation history using an algorithm of machine learning or the like, and a pattern based on a relationship between attribute of the file and the executed process may be extracted and used. The selection condition automatically generated in this manner and the pattern of the work procedure extracted from the operation history may be editable by the user.

The target file specifying function 160 is a function of specifying a target file, which is a file having potential to be a target of the designated process, in a case where one of the processes in the designated task is designated after the task is designated. The target file is a file on which the designated process is executable at that time in the case where the process is designated on the UI screen. In the present exemplary embodiment, the routine task in which the process is executed in accordance with a predetermined work procedure is used as a task. Therefore, the file on which the designated process is executable is a file on which the designated process should be performed next based on the work procedure in the task. In other words, this file is a file on which a process performed immediately before the designated process is completed.

Here, the target file specified by the target file specifying function 160 may not be limited to a file having potential to be a target of the process in the designated task, in other words, a file selected by the file screening function 150. In this case, the target file includes a file having potential to be a target of the designated process when a process is performed in a task other than the designated task. A file having potential to be a target of the process designated by performing the process in the task other than the designated task may be distinguished from the target file as a quasi-target file.

A specific example will be further described. For example, a task A for which a work procedure is set such that processes are executed in an order of a process 1, a process 2, and a process 3 is considered. Further, it is assumed that, on the UI screen, after the task A is designated, the process 2 is designated. Further, it is assumed that the file subjected to the process 1 has potential to be the target of the process 2 next regardless of the type of the task. In this case, first, when the task A is designated, a file to be a target of any one of the processes 1, 2, and 3 in the task A is selected by the file screening function 150. Next, when the process 2 in the task A is designated, among the files selected by the file screening function 150, a file on which the process 1 has already been performed and the process 2 has not been executed and a file on which the process 1 has already been performed and process 2 has not been executed in a task other than the task A are specified as the target file (quasi-target file).

The software management function 170 is a function of managing the extension function. The process by the extension function is executed in accordance with the work procedure of each task. Therefore, each extension function is managed in association with a task including a process by the extension function. In addition, there is a case where the same process may be executed in plural tasks. Therefore, each extension function may be associated with plural tasks. In this case, an execution timing of the process by the same extension function may differ depending on the task. For example, one process may be a third process to be executed in the task A, and may be a second process to be executed in a task B. Therefore, with respect to each extension function, information of the timing at which the process by the extension function is executed in the task may be managed in association with each task. In addition, in a case where an execution condition of the process by the extension function is specified based on the work procedure or the like in the task, the execution condition of the process by the extension function specified for each task may be managed in association with each extension function.

The task management function 180 is a function of managing a task configured by plural works. In addition, the task management function 180 also manages a relationship between works that constitute each task. For example, a relationship between works in which a process of a certain work has to be executed on a certain file before executing a process of another work included in the same task on the file is managed. In the present exemplary embodiment, the routine task in which plural processes are executed in accordance with a certain work procedure defined by a workflow is used as a task. Therefore, in the task management function 180, the works executed in each task and an execution order of the works are managed in relation to the task to be managed.

The file management function 190 is a function of managing a file to be processed in the task and stored in a specific folder. Here, when a certain file is a target of the process in a certain task, the task is referred to as a "target task" of the file. As a result, each file becomes a target of the next process in the work procedure of the target task according to a stage to which the file corresponds in the target task. Specifically, a certain file is not subjected to any process in an initial state, and becomes a target of a process to be executed first in the target task. In general, this file becomes a target of a process to be performed next to the process executed last for the file based on the work procedure of the target task. In the file management function 190, with respect to each file stored in a specific folder, information indicating which task the target task is and information indicating which stage in the work procedure of the target task the file is are associated with each other. As a result, it is possible to specify a process to be executed next for each file.

### <Operation of Information Processing Apparatus 10>

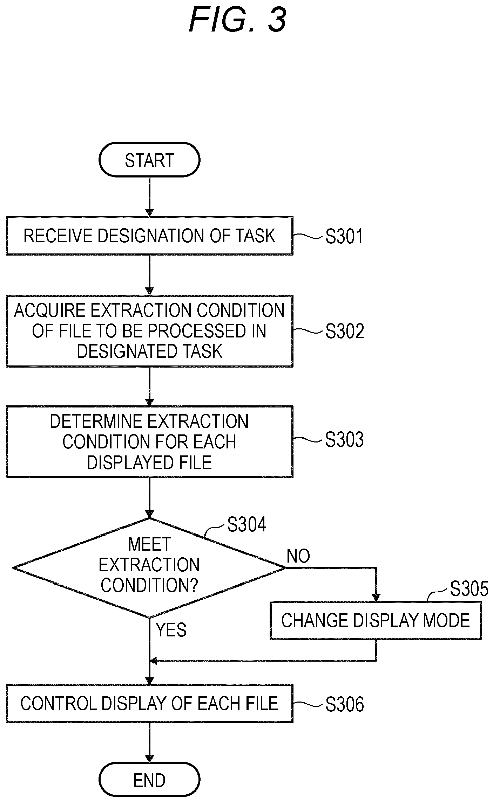

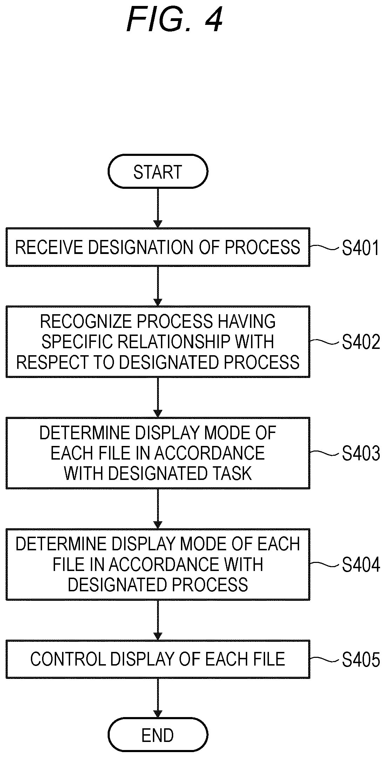

Figs. 3 and 4 are flowcharts illustrating operations related to the display of the UI screen by the information processing apparatus 10. Fig. 3 is a diagram illustrating an operation in the case where a task is designated on the UI screen, and Fig. 4 is a diagram illustrating an operation in the case where a process is designated on the UI screen. The operations of the information processing apparatus 10 will be described with reference to Figs. 3 and 4. It is assumed that the UI screen including a display for selecting a task, a display for selecting a process performed in the task, a display for selecting a file to be processed, and the like is displayed on the display device 20 in advance. In addition, it is assumed that all files stored in the specific folder managed by the file management function 190 are displayed on the UI screen.

When the user operates the input device 30 and performs a designation operation of the task on the UI screen, as illustrated in Fig. 3, the information processing apparatus 10 receives the operation (S301), and the file screening function 150 identifies a file to be processed and a file not to be processed in the designated task. Then, the information processing apparatus 10 determines a display mode of each file on the UI screen according to an identification result of the file by the display control function 140. Specifically, the information processing apparatus 10 first acquires an extraction condition of a file to be processed in the designated task (S302).

Next, the information processing apparatus 10 determines whether each file displayed on the UI screen meets the extraction condition acquired in S302 (S303 and S304). Then, the information processing apparatus 10 changes the display mode of the file that meets the extraction condition to be different from the display mode of the file that does not meet the extraction condition (S305). For example, the file that meets the extraction condition may be displayed as a normal display, and the display mode of the file that does not meet the extraction condition may be changed to an inconspicuous display mode. As the inconspicuous display mode, for example, the file that does not meet the extraction condition may be displayed in gray or in a light display color. Thereafter, the information processing apparatus 10 controls the display of each file on the UI screen in accordance with the display mode determined in S303 to S305 by the display control function 140 (S306).

Next, when the user operates the input device 30 and performs a designation operation of a process on the UI screen in a state in which the task is designated, as illustrated in Fig. 4, the information processing apparatus 10 receives the operation (S401), and recognizes a process having a specific relationship with respect to the designated process by the software management function 170 and the task management function 180 (S402). Here, the process having the specific relationship with respect to the designated process is a process (referred to as a "process 02") to be executed before a designated process (referred to as a "process 01") is performed. In other words, on the file on which the process 02 is executed the process 01 may then be executed. As one example, considering the routine task in which plural processes are sequentially executed in accordance with a predetermined procedure, the process 02 is positioned immediately before the process 01 in this procedure. In general, in a case where the task is not limited to the routine task, the process 02 is not necessarily executed immediately before the process 01. Another process (referred to as a "process 03") may be executed before the process 01 is executed after the process 02 is executed as long as the process 02 is executed before the process 01 is executed. However, in this case, a case where the process 01 cannot be executed due to the execution of the process 03 is excluded. In addition, plural processes 02 may be provided for a certain process 01. In this case, when any of the processes 02 is executed, the process 01 may be executed thereafter. Further, the process 02 for a certain process 01 may be configured by plural processes. For example, in a case where all of the three types of processes are executed regardless of an execution order thereof, and the process 01 is executable thereafter, these three types of processes may be combined and treated as the process 02, and the process 01 may be executed after these processes are executed.

Next, the information processing apparatus 10 determines the display mode of each file displayed on the UI screen in accordance with the designated task (S403). The decision of the display mode of the file based on the designation of the task is the same as the decision method (S302 to S305) described with reference to Fig. 3. Therefore, the display mode of each file determined when the task is designated may be used as it is.

Next, the information processing apparatus 10 determines the display mode of each file displayed on the UI screen in accordance with the designated process (S404). Specifically, a display mode of the target file of the designated process is different from a display mode of the non-target file. For example, the target file may be kept in the normal display, and the non-target file may be changed to an inconspicuous display mode. As the inconspicuous display mode, for example, the file that does not meet the extraction condition may be displayed in gray or in a light display color. Here, the target file is a file on which the process 02 described above has been executed and the process 01 has not been executed.

At this time, only the target file of the designated process is displayed as the normal display and the other files are changed to the inconspicuous display mode, among the files that are the targets of any process in the designated task and are normally displayed in S403. On the other hand, the file on which the designated process is executable among the files that are displayed in the inconspicuous display mode in S403 because the files are not the targets of the process in the designated task is treated as the target file, and the display mode thereof is changed to the normal display. Thereafter, the information processing apparatus 10 controls the display of each file on the UI screen in accordance with the display mode determined in S403 or S404 by the display control function 140 (S405).

### <Display Example of UI Screen>

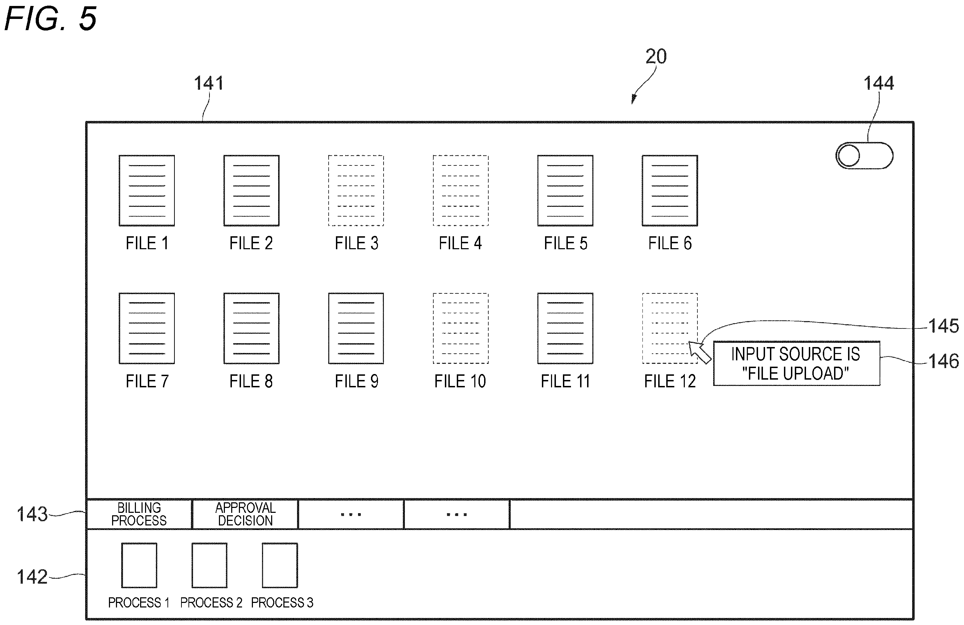

The display of the UI screen will be described with reference to Figs. 5 to 7. On the UI screen illustrated in Figs. 5 to 7, a file display field 141, a process display field 142, a task display tab 143, and a filter button 144 are provided, and twelve files "file 1" to "file 12" are displayed in the file display field 141. In addition, a pointer 145 operated by a pointing device such as a mouse is displayed on the UI screen illustrated in Figs. 5 to 7. In addition, an annotation display 146 for displaying an explanation, a message, and the like is displayed on the UI screen illustrated in Fig. 5.

Fig. 5 is a diagram illustrating a configuration example of the UI screen. The task display tab 143 is a display for receiving selection of a task. On the UI screen, a selectable task is displayed as a tab for each task. In an example illustrated in Fig. 5, as the task display tab 143, task tabs such as "billing process" and "approval decision" are displayed. The task displayed as a tab is a task managed by the task management function 180. The user may specify a task including a process to be executed by selecting one of the tabs displayed on the UI screen. When the designation of the task by the selection of the tab is performed, the information processing apparatus 10 specifies the process included in the designated task by the task management function 180. The designation operation of the task is performed, for example, by positioning the pointer 145 on a tab corresponding to the task to be selected and performing a mouse click, or the like.

Further, the information processing apparatus 10 specifies a file having potential to be a target of a process included in the designated task by the file screening function 150, and determines the display mode of each file by the display control function 140 as described with reference to Fig. 3. Then, the information processing apparatus 10 displays the specified process in the process display field 142, and controls the display mode of the file displayed in the file display field 141. In the example illustrated in Fig. 5, eight files of a "file 1 ", a "file 2", a "file 5", a "file 6", a "file 7", a "file 8", a "file 9", and a "file 11" are files having potential to be targets of the process included in the designated task, and are indicated by solid lines. Four files of a "file 3", a "file 4", a "file 10", and a "file 12" are files that cannot be targeted for the designated process, and are indicated by broken lines.

The process display field 142 is a display field for displaying processes executed in the works constituting the task. In the process display field 142, for example, an object such as an icon representing a process to be displayed is displayed. When the task is designated by the selection of the task display tab 143, the processes of the work constituting the designated task are displayed in the process display field 142. In the example illustrated in Fig. 5, three types of processes of a "process 1", a "process 2", and a "process 3" are displayed in the process display field 142 as processes that constitute the designated task.

The process display field 142 is a display for receiving selection of a process to be executed. When the user selects one of the processes displayed in the process display field 142, the information processing apparatus 10 controls the display mode of the file displayed in the file display field 141 as described with reference to Fig. 4. The designation operation of the process is performed, for example, by positioning the pointer 145 on an object of a process to be selected among the processes displayed in the process display field 142 and performing a mouse click, or the like.

The file display field 141 is a display field for displaying a file having potential to be a target of any process having potential to be designated in the information processing apparatus 10 according to the present exemplary embodiment. In the file display field 141, for example, an object such as an icon representing a file to be displayed is displayed. This file is, for example, a file stored in the specific folder described above and managed by the file management function 190. The files displayed in the file display field 141 are displayed in different display modes between a file having potential to be a target of the process included in the designated task and a file that cannot be a target of the process included in the designated task, when the task is designated. In addition, the files displayed in the file display field 141 are displayed in different display modes between the target file and the non-target file of the designated process, when the process is designated. In the example illustrated in Fig. 5, as described above, it is shown that these files of the "file 1", the "file 2", the "file 5", the "file 6", the "file 7", the "file 8", the "file 9", and the "file 11", and these files of the "file 3", the "file 4", the "file 10", and the "file 12" are displayed in different display modes.

The file display field 141 is a display for receiving selection of a file. As described above, when the task and the process are designated, the target file and the non-target file are displayed in the different display modes in the file display field 141. Though both the target file and the non-target file may be selected, events to be executed thereafter differ between the case where the target file is selected and the case where the non-target file is selected.

When the user selects one of the target files displayed in the file display field 141, the information processing apparatus 10 executes the process designated in the process display field 142 for the selected target file. On the other hand, when the user selects one of the non-target files displayed in the file display field 141, the selected non-target file is changed to a target file. Accordingly, it may be possible to execute the process designated in the process display field 142 with respect to the selected non-target file. The file changed from the non-target file to the target file may be displayed separately from the target file in the file display field 141.

On the UI screen, the display mode of the selected file is changed from the display mode of the non-target file to the display mode of the target file. However, in a case where the selected non-target file is a file on which the designated process cannot be executed, the change to the target file is not performed. In this case, a message indicating that the process cannot be executed may be displayed by a pop-up display or the like. When the selection operation is performed again on the file changed from the non-target file to the target file by the selection, the information processing apparatus 10 executes the process designated in the process display field 142 on the selected file, similarly to the other target files. The designation operation of the file is performed, for example, by positioning the pointer 145 on an object of a file to be selected among the files displayed in the file display field 141 and performing a mouse click, or the like.

The filter button 144 is a button object for setting application or non-application of the selection condition for specifying a file having potential to be the target of the process included in the designated task when the task is designated. In the example illustrated in Fig. 5, the filter button 144 is composed of an object of a toggle button, and is switched between a turning-on state and a turning-off state by an operation on the UI screen. In a case where the filter button 144 is set to the turning-off state, a selection condition for specifying a file having potential to be the target of the process included in the designated task is not applied. Therefore, all the files displayed in the file display field 141 are displayed in the same display mode as the file having potential to be the target of the process included in the designated task.

On the UI screen, when one of the files displayed in the file display field 141 is selected by an operation different from the above designation operation, the annotation display 146 is displayed for the selected file. For example, in a case where a file having potential to be the target of the process included in the designated task is selected, a content displayed on the annotation display 146 is a message or the like indicating a reason why the file is selected as a file having potential to be the target of the process included in the designated task. In addition, in a case where a file that cannot be the target of the process included in the designated task is selected, a content displayed on the annotation display 146 is a message or the like indicating a reason why the file is not selected as the file having potential to be the target of the process included in the designated task. A selection condition of the file having potential to be the target of the process included in the designated task may be included in these indications. In addition, in the case where the target file of the designated process is selected, a content displayed on the annotation display 146 is a message or the like indicating a reason why the file is set as the target file. In the case where the non-target file of the designated process is selected, a content displayed on the annotation display 146 is a message or the like indicating a reason why the file is set as the non-target file. A selection condition for the target file or the non-target file may be included in these indications. As a selection operation of a file different from the designation operation, for example, an operation such as a mouse over that causes the pointer 145 to be positioned in an object of a file to be selected, among the files displayed in the file display field 141, may be used. In the example illustrated in Fig. 5, the "file 12" is selected and a message "an input source is 'file upload'" is displayed indicating a reason why the file is not selected as a file having potential to be the target of the process included in the designated task.

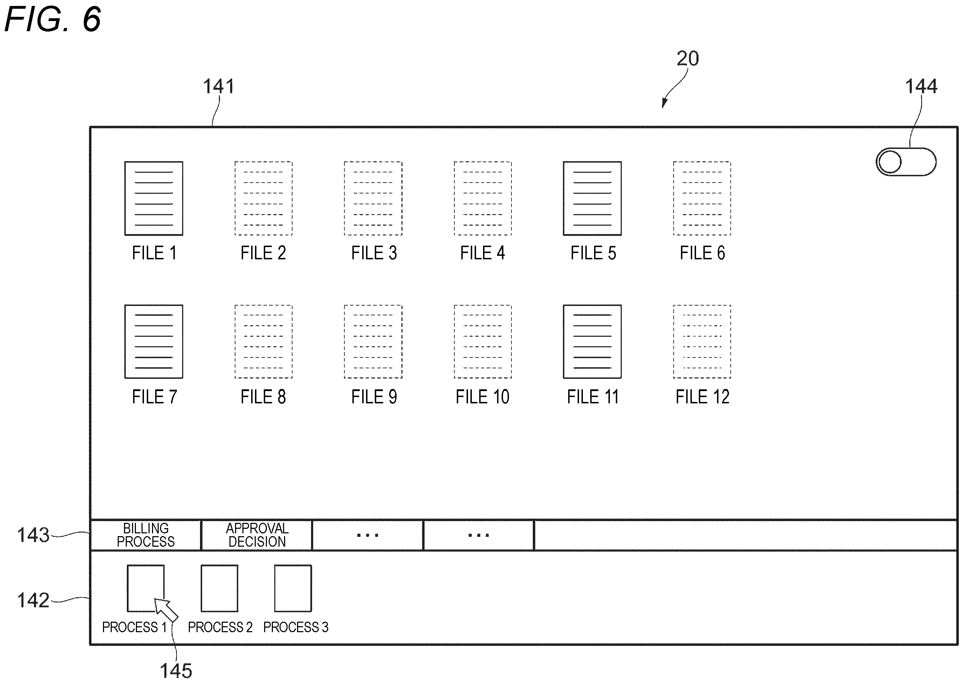

Fig. 6 is a diagram illustrating a state in which one process is designated on the UI screen illustrated in Fig. 5. In the UI screen illustrated in Fig. 6, among the files displayed in the file display field 141, the target files of the designated process are indicated by solid lines, and the non-target files are indicated by broken lines. In the example illustrated in Fig. 6, the "process 1" is selected from among the processes constituting the designated task. Here, among the files displayed in the file display field 141, files in which the "process 1" is executable are four files of the "file 1", the "file 5", the "file 7", and the "file 11". Therefore, in the example illustrated in Fig. 6, in the file display field 141, the "file 1", the "file 5", the "file 7", and the "file 11" are displayed as the target files of the "process 1", and the other files are displayed as the non-target files.

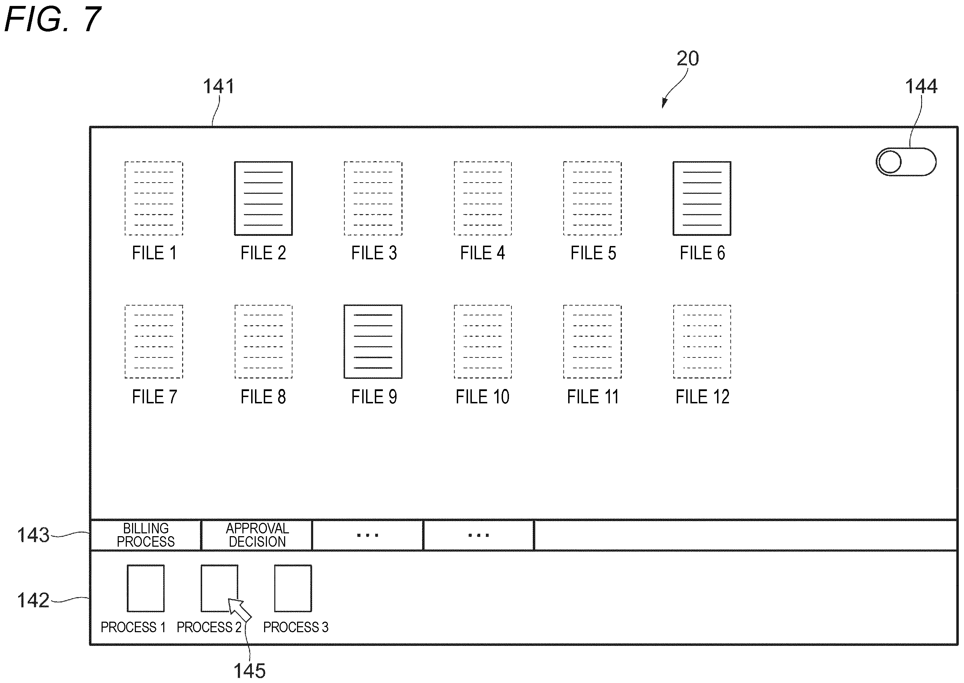

Fig. 7 is a diagram illustrating a state in which another process is designated on the UI screen illustrated in Fig. 5. On the UI screen illustrated in Fig. 7, as in Fig. 6, among the files displayed in the file display field 141, the target files of the designated process are indicated by solid lines, and the non-target files are indicated by broken lines. In addition, in the example illustrated in Fig. 7, the "process 2" is selected from among the processes constituting the designated task. Here, among the files displayed in the file display field 141, files in which the "process 2" is executable are three files of the "file 2", the "file 6 ", and the "file 9". Therefore, in the example illustrated in Fig. 7, in the file display field 141, the "file 2", the "file 6", and the "file 9" are displayed as the target files of the "process 2", and the other files are displayed as the non-target files. Comparing Fig. 6 and Fig. 7, when the designated process is changed from the "process 1" to the "process 2", the target file is switched from the "file 1", the "file 5", the "file 7", and the "file 11" to the "file 2", the "file 6", and the "file 9".

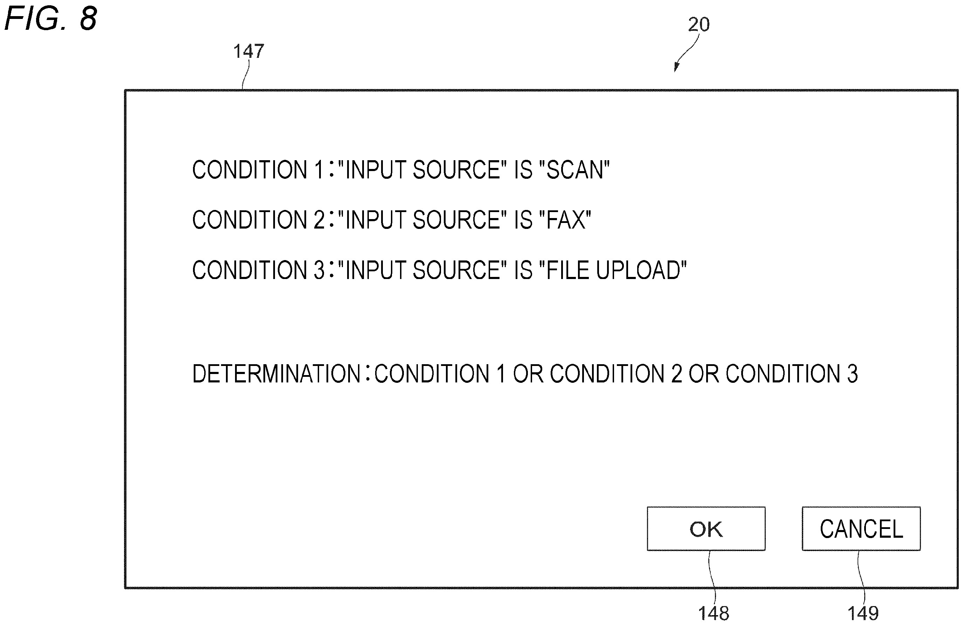

Fig. 8 is a diagram illustrating an example of an edit screen of selection conditions, which is an example of yet another UI screen. The user may edit the selection condition for selecting the file having potential to be the target of the process in the designated task on an edit screen 147 of the selection condition. For example, a transition to the edit screen 147 may be performed by performing a predetermined operation on the UI screen illustrated in Figs. 5 to 7. As a transition operation of the screen, for example, right click of the mouse may be performed at a place where no file is displayed in the file display field 141 of the UI screen illustrated in Figs. 5 to 7.

In the edit screen 147 illustrated in Fig. 8, the selection conditions in the designated task are displayed. The selection condition may be set by, for example, a combination of an individual condition for specifying an attribute of a file and an applicable condition for specifying an applicable method of the individual condition. In the example of Fig. 8, three individual conditions of conditions 1 to 3 are set as the selection conditions and an applicable condition (described as "determination" in the drawing) is met in a case where any one of these individual conditions is met. In the example illustrated in Fig. 8, the type of input means of file (described as "input source" in the drawing) is specified as the individual condition, but the attribute of the file that may be set as the individual condition is not limited to the type of input means. For example, a data format of the file, the operation history of the file, or the like may be set as the individual conditions. In addition, in the example illustrated in Fig. 8, a condition in which the applicable condition corresponds to any one of the conditions 1 to 3 is set as "condition 1 or condition 2 or condition 3", but depending on a content of the individual condition and the type of the task, it may be required that plural conditions are satisfied as the applicable condition. For example, the applicable condition may be set as "condition 1 and condition 2".

Although the exemplary embodiment of the present invention has been described above, the technical scope of the present invention is not limited to the above exemplary embodiment. For example, in the exemplary embodiment described above, the file having potential to be the target of the process included in the designated task and the file that cannot be the target of the process included in the designated task are displayed in the different display modes, and the target file and the non-target file of the designated process are displayed in the different display modes. On the other hand, instead of displaying all files stored in the specific folder with different display modes, only a file having potential to be the target of the process included in the task designated when the task is designated may be extracted and displayed, or only the target file of the process designated when the process is designated may be extracted and displayed.

In the exemplary embodiment described above, the selected non-target file is changed to the target file by selecting the non-target file after the process is designated. On the other hand, even when a task is designated, by selecting a file that cannot be the target of the process included in the designated task, the selected file may be changed to a file that having potential to be a target of the process included in the designated task.

The file changed from the non-target file to the target file may be displayed in a display mode different from any of the target file and the non-target file so as to be identifiable. Similarly, the file that has been changed to the file having potential to be the target of the process included in the designated task from the file that cannot be the target of the process included in the designated task may be displayed in a display mode different from any of a file that cannot be the target of the process included in the designated task and the file having potential to be the target of process so as to be identifiable.

In the exemplary embodiments above, the term "processor" refers to hardware in a broad sense. Examples of the processor include general processors (e.g., CPU: Central Processing Unit), and dedicated processors (e.g., GPU: Graphics Processing Unit, ASIC: Application Specific Integrated Circuit, FPGA: Field Programmable Gate Array, and programmable logic device).

In the exemplary embodiments above, the term "processor" is broad enough to encompass one processor or plural processors in collaboration which are located physically apart from each other but may work cooperatively. The order of operations of the processor is not limited to one described in the exemplary embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
at least one processor configured to
receive designation of a process in a task, the task including a series of processes to be executed on a document, and
extract and display a target file as a document file to be processed in the process that is designated in a document file group as a target of the task.

2. The information processing apparatus according to claim 1, wherein
the at least one processor is configured to display a non-target file in the document file group in a display mode that is different from a display mode for the target file, the non-target file being a document file other than the target file.

3. The information processing apparatus according to claim 2, wherein
the at least one processor is configured to
receive designation of a document file for at least one of the target file and non-target file displayed, and
display a selection condition under which the document file that is designated is determined as the target file or the non-target file.

4. The information processing apparatus according to claim 2, wherein
the at least one processor is configured to
receive designation of the non-target file that is displayed, and
change a display mode for the non-target file that is designated, to a display mode that is same as the display mode for the target file.

5. The information processing apparatus according to claim 2, wherein
the at least one processor is configured to switch the display mode of the non-target file between the display mode different from the target file and the display mode same display mode as the display mode for the target file, as the display mode for the non-target file.

6. The information processing apparatus according to claim 1, wherein
the at least one processor is configured to
receive designation of a task of a plurality of tasks, and,
in response to receiving designation of the process in the task designated, display the target file of the process designated in the designated task and a quasi-target file that is a document file on which the process is executable in another task.

7. The information processing apparatus according to claim 6, wherein
the at last one processor is configured to display a document file other than the target file and the quasi-target file among the document file group that are the target of the task designated and the other task in a display mode different from a display mode for the target file and the quasi-target file.

8. The information processing apparatus according to claim 1, wherein
the at least one processor is configured to generate a selection condition of the target file based on a predetermined rule in accordance with a type of the process included in the task.

9. A program causing a computer to execute a process, the process comprising:
receiving designation of a process in a task, the task including a series of processes to be executed on a document, and
extracting and displaying of a target file as a document file to be processed in the process that is designated in a document file group as a target of the task.
